# FASCICULE DE BREVET EUROPEEN

(11) **EP 1 777 187 B1**
(45) Date de publication et mention de la délivrance du brevet: **29.12.2010**
(21) Numéro de dépôt: 06370027.2
(22) Date de dépôt: 22.09.2006
(51) Int. Cl.: B65H 39/16, D04H 13/00, D01G 25/00, B32B 5/26

(54) **Procédé et ensemble pour la formation d'une bande de non-tissé multicouche avec maintien électrostatique de ladite bande de non-tissé**
Verfahren und Anordnung zur Bildung einer Bahn aus mehrschichtigem Vliesstoff mit elektrostatischem Halten dieser Bahn aus Vliesstoff
Method and arrangement for forming a multilayer nonwoven web with electrostatic holding of this nonwoven web

(30) Priorité: 19.10.2005 FR 0510660
(43) Date de publication de la demande: 25.04.2007
(73) Titulaire: Asselin-Thibeau, 59200 Tourcoing (FR)
(72) Inventeur: Laune, Jean-Christophe, 79500 Elbeuf (FR); Catry, Xavier, 59510 Hem (FR); Brabant, Marc, 59510 Hem (FR)
(74) Mandataire: Matkowska, Franck

(56) Documents cités:
- EP-A- 1 191 139
- EP-A2- 1 702 874
- WO-A-92/21799
- DE-A1- 10 144 287
- FR-A- 2 667 267
- US-A1- 2003 061 686
- US-A1- 2004 091 733
- US-B1- 6 372 004

## Description

### Domaine technique

La présente invention concerne un perfectionnement, apporté dans le domaine textile, à la formation et au transport d'une bande de non-tissé multicouche. La présente invention trouve son application à tout type de non-tissé (non-tissé cardé, «spun», « metlblown», « airlaid ») et est utilisée de préférence avant consolidation de la bande de non-tissé multicouche.

### Art antérieur

### Bande de non-tissé multicouche

Dans le présent texte, on désigne d'une manière générale par les termes « bande de non-tissé multicouche», tout voile ou nappe de fibres ou de filaments constituée par la superposition d'au moins deux couches non-tissé de fibres ou de filaments, indépendamment de la méthode de fabrication des couches non-tissé. En particulier, chaque couche de non-tissé peut être constituée par un voile (ou nappe) de fibres ou filaments choisies parmi la liste : voile non-tissé cardé, voile non-tissé « air laid », voile non-tissé de type « meltblown », voile non-tissé de type « spun ». Les couches de non-tissé d'une bande de non-tissé multicouche peuvent être issus de bandes de non-tissé (monocouche ou multicouche) différentes, ou au contraire être issus d'une même bande de non-tissé (monocouche ou multicouche), tel que par exemple dans le cas d'une bande de non-tissé multicouche en sortie d'étaleur-nappeur.

De surcroît, toutes les couches non-tissé d'une bande de non-tissé multicouche peuvent être du même type, ou la bande de non-tissé multicouche peut être composite, c'est-à-dire constituée de plusieurs couches de non-tissé de types différents tel que par exemple une bande de non-tissé multicouche composite de type CMC (voile cardé/voile « meltblown »/voile cardé) ou encore de type SMS (voile « spun »/voile « meltblown »/ voile « spun »)

Il est rappelé qu'une bande de non-tissé multicouche subit généralement à un stade ultérieur de sa constitution une ou plusieurs étapes de consolidation, tel que notamment liage mécanique par exemple par aiguilletage, liage hydraulique par jets d'eau, thermoliage par calandrage, ou liage chimique par exemple au moyen d'un adhésif. Dans le présent texte, le terme « bande de non-tissé » désigne indifféremment une bande de non-tissé consolidée ou non consolidée.

### Formation et transport d'une bande de non-tissé multicouche

Pour former une bande de non-tissé multicouche, on dépose une première couche de non-tissé sur une surface de transport en mouvement, du type par exemple bande de transport, et on dépose sur cette première couche de non-tissé en mouvement, au moins une deuxième couche de non-tissé.

Dans la zone de réunification des deux couches, les risques de dégradation de la bande de non-tissé multicouche sont importants, la deuxième couche de non-tissé étant sensible dans cette région à toute perturbation extérieure, notamment à des perturbations aérauliques. Ces risques contribuent à limiter la vitesse de déplacement de la surface de formation et de transport de la bande de non-tissé multicouche.

Egalement, en aval de la zone de la réunification des deux couches non-tissé, des problèmes de dégradation de la bande de non-tissé multicouches peuvent apparaître, en particulier, mais pas exclusivement, dans le cas d'une bande de non-tissé multicouche épaisse dont les couches non-tissé sont faiblement comprimées. En effet, la surface de transport, au cours de son déplacement, entraîne avec elle une couche d'air limite. Tant que la couche de non-tissé supérieure de la bande de non-tissé multicouche reste à l'intérieur de cette couche d'air limite, on ne rencontre généralement pas de problème. En revanche, dès que la couche de non-tissé supérieure de la bande de non-tissé sort en tout ou partie de cette couche d'air limite, on observe des problèmes de soulèvement et de retournement au moins de la couche supérieure qui sont extrêmement préjudiciables à la qualité de la bande de non-tissé multicouche. Ce phénomène est amplifié dans le cas d'une bande de non-tissé épaisse, dont les couches de fibres sont faiblement comprimées et/ou dans le cas d'une bande de non-tissé multicouche du type de celle obtenue en sortie d'un étaleur-nappeur. Les risques de détérioration sont également prépondérants dans les régions de transport dans lesquelles la bande de non-tissé multicouche subit un changement de direction.

La demande de brevet Européen EP 1 702 874 divulgue un procédé de transport d'une bande de non-tissé avec maintien électrostatique de la bande de non tissé dans au moins une zone de dimension inférieure à la largeur de la bande. Dans une variante, au cours de ce procédé on dépose au moins une couche de non-tissé de fibres ou filaments sur au moins une autre couche de non-tissé de fibres ou filaments transportée par une surface de transport dans une direction de transport donnée, en sorte de former une bande de non-tissé multicouche, et on charge électrostatiquement la bande de non-tissé multicouche et/ou la surface de transport, en sorte de faire adhérer la bande de non-tissé multicouche contre la surface de transport.

### Objectif de l'invention

La présente invention a pour objectif général de proposer une nouvelle solution technique aux problèmes précités de dégradation d'une bande de non-tissé multicouche rencontrés lors de la formation ou du transport de ladite bande de non-tissé multicouche.

### Résumé de l'invention

Cet objectif est atteint par l'invention, qui a pour premier objet un procédé de formation et de transport d'une bande de non-tissé multicouche, tel que defini dans la revendication 1.

L'invention a pour autre objet un ensemble de formation et de transport d'une bande de non-tissé multicouche, tel que défini dans la revendication 5.

### Brève description des figures

D'autres caractéristiques et avantages de l'invention apparaîtront plus clairement à la lecture de la description détaillée ci-après de plusieurs exemples préférés de réalisation de l'invention, laquelle description est donnée à titre d'exemple non limitatif et non exhaustif de l'invention, et en référence aux dessins annexés sur lesquels:
- la figure 1 est une représentation schématique d'une sortie de carde non-tissé, comportant deux transporteurs à bande successifs, le premier transporteur à bande étant associé, conformément à l'invention, à des moyens d'ionisation,
- la figure 2 représente de manière schématique une deuxième application de l'invention mettant en oeuvre deux transporteurs à bande permettant de former une bande de non-tissé multicouche, par superposition de deux bandes de non-tissé dans le sens de leur longueur et dans la direction de transport de la bande de non-tissé multicouche,
- la figure 3 est une représentation schématique, en vue de dessus, de l'ensemble de formation et de transport de la figure 2, les moyens d'ionisation étant conformes à une première variante de réalisation,
- la figure 4 est une représentation schématique, en vue de dessus, de l'ensemble de formation et de transport de la figure 2, les moyens d'ionisation étant conformes à une deuxième variante de réalisation,
- la figure 5 est une représentation schématique, en vue de dessus, de l'ensemble de formation et de transport de la figure 2, les moyens d'ionisation étant conformes à une troisième variante de réalisation,
- la figure 6 est une représentation schématique, en vue de dessus, d'un étaleur-nappeur équipé en sortie de moyens d'ionisation, et
- la figure 7 est une vue schématique de coté de l'étaleur-nappeur de la figure 6.

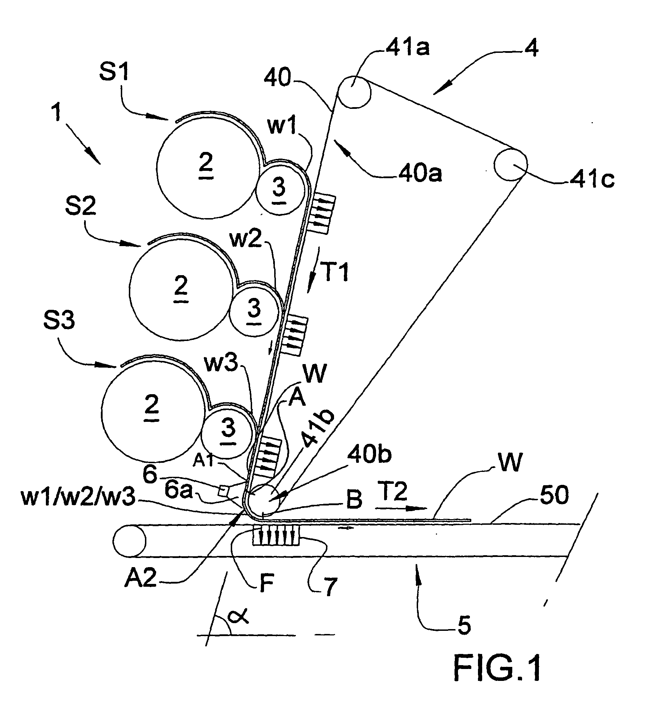

On a représenté, sur la figure 1, un premier exemple d'application de l'invention dans le domaine de la formation et du transport d'une bande de non-tissé multicouche W par superposition de plusieurs bandes (voiles) de non-tissé fabriquées en parallèle au moyen d'une carde 1. Sur cette figure 1, seuls les organes de sortie de la carde montés en aval du tambour de cardage principal ont été représentés.

La carde 1 de la figure 1 comporte trois sorties S1, S2 et S3, comportant chacune au moins un cylindre 2 de formation de voile, par exemple un cylindre de type peigneur ou condenseur, associé à un cylindre détacheur 3. En fonctionnement, la carde permet de manière usuelle la production en parallèle de trois bandes de non-tissé W1, W2 W3 non consolidées. Les trois bandes de non-tissé W1, W2 et W3 sont constituées de fibres formant un matériau diélectrique. Il s'agit par exemple de fibres synthétiques à base de polypropylène ou polyéthylène, et/ou de fibres naturelles du type coton, et/ou de fibres artificielles de type viscose.

Dans la configuration particulière de la figure 1, la carde 1 est en outre équipée en sortie de deux transporteurs à bande 4 et 5.

Le premier transporteur à bande 4 permet d'une part la réception en sortie de carde des trois bandes de non-tissé W1, W2 et W3, la bande de non-tissé W3 étant déposée sur la bande de non-tissé W2, elle-même déposée sur la bande de non-tissé W1. On forme ainsi une bande de non-tissé multicouche W constituée de trois couches non-tissé W1,W2 et W3 superposées.

Le premier transporteur à bande 4 permet d'autre part l'acheminement de la bande de non-tissé multicouche W jusqu'au deuxième transporteur à bande 5, en vue de son acheminement ultérieur par exemple jusqu'à une station de consolidation de type calandre, aiguilleteuse, etc...

Plus particulièrement, le premier transporteur à bande 4 comporte une bande de transport 40 enroulée et tendue selon un trajet fermé sur des rouleaux de guidage 41a, 41b, 41c, dont l'un au moins (par exemple le rouleau 41c) est un rouleau d'entraînement motorisé, les autres rouleaux 41a et 41b étant par exemple montés libres en rotation et servant uniquement à guider la bande de transport 40. La bande de transport 40 peut avantageusement et indifféremment selon l'invention être perméable à l'air ou imperméable à l'air.

Entre les deux rouleaux de guidage 41a et 41b, la bande de transport 40 forme une première portion rectiligne 40a entraînée dans la direction de transport T1. Cette première portion rectiligne 40a se prolonge à la périphérie du rouleau de guidage 41b par une portion de transition courbe 40b.

En fonctionnement de la carde 1, de la bande de non-tissé multicouche W est acheminée dans premier temps dans la direction de transport T1 jusqu'au rouleau de guidage 41b, où elle subit un changement de direction relativement brusque dans la portion courbe de transition 40b. Dans cette portion courbe 40b, la bande de non-tissé multicouche W est en contact avec la bande de transport 40 sur un secteur courbe (AB) ; la génératrice A correspond à la transition entre la première portion rectiligne 40a et la portion courbe 40b de la bande de transport 40 ; la génératrice B marque la limite où la bande de non-tissé multicouche W quitte la bande de transport 40 et est reprise par le deuxième transporteur à bande 5.

En sortie du secteur courbe (AB), la bande de non-tissé multicouche W est reprise par le transporteur à bande 5 et est acheminée dans la direction de transport T2. Sur la figure 1, l'angle α correspond à l'angle de changement de direction de la bande de non-tissé multicouche W au niveau du rouleau de guidage 41 b. Cet angle α est supérieur à 45°.

A proximité de la bande de transport 40, dans la région de transition entre la première portion rectiligne 40a et la portion courbe 40b, est montée une barre ionisante ionisante 6 fixe qui s'étend dans la direction perpendiculaire au plan de la figure 1, sur sensiblement toute la largeur de la bande de transport 40.

La barre ionisante 6 permet, en fonctionnement, de générer un champ électrique puissant 6a, saturé en ions, dit champ ionisant. A cet effet, la barre ionisante 6 comporte par exemple une pluralité d'électrodes ou pointes haute tension qui sont alimentées par un générateur de haute tension continue (non représenté). Plus particulièrement, la barre ionisante 6 permet de générer des ions négatifs localement dans la région de transition entre la première portion rectiligne 40a et la portion courbe 40b, à proximité sur toute la largeur des trois bandes de non-tissé superposées W1/W2/W3. La bande de transport 40 est réalisée dans un matériau électriquement conducteur, et fait office de masse reliée à la terre.

Lorsque la bande de non-tissé multicouche W passe dans le champ ionisant 6a, elle se charge en ions négatifs. Ces ions sont attirés par bande de transport 40. La charge électrostatique des couches non-tissé superposées W1/W2/W3 permet de les plaquer et de les faire adhérer temporairement contre la surface de la bande de transport 40, au moins dans le secteur courbe (AB) correspondant au changement de direction. Egalement, on obtient une légère compression des couches non-tissé W1,W2,W3 avant le changement de direction. Les trois couches de non-tissé W1/W2/W3 de la bande multicouche W sont ainsi parfaitement maintenues contre la bande de transport 40 lors du changement de direction (de la direction de transport T1 vers la direction de transport T2), et on évite ainsi tout risque de décollement des bandes de non-tissé W1, W2 ou W3 lors du changement de direction.

Par contraste, lorsque la barre ionisante 6 ne fonctionne pas (ou est retirée), compte tenu de leur inertie, les trois bandes de non-tissé W1, W2, W3 ont tendance en sortie de la première portion rectiligne 40a à poursuivre leur mouvement dans la direction T1, et de ce fait à décoller localement de la bande de transport 40 dans la portion courbe 40b de changement de direction. Plus la vitesse d'entraînement des bandes de non-tissé W1,W2, W3 est élevée et/ou plus le poids des bandes de non-tissé W1,W2, W3 est important, et plus ce risque de décollement est important. Or un tel décollement des bandes de non-tissé W1, W2, W3 aboutit à une détérioration préjudiciable de leur structure. Le maintien électrostatique des trois bandes de non-tissé W1, W2, W3 permet d'éviter ce phénomène de décollement, et incidemment d'augmenter la vitesse de transport des bandes de non-tissé.

Egalement, la couche de non-tissé supérieure W1 étant plaquée par sa charge électrostatique contre la couche de non-tissé intermédiaire, W2, elle-même plaquée par sa charge électrostatique contre couche de non-tissé inférieure W3, on obtient avantageusement un maintien électrostatique des trois couches de non-tissé l'une part rapport à l'autre, ce qui permet avantageusement d'éviter tout glissement relatif des couches de non-tissé l'une par rapport à l'autre dans la portion courbe 40b du changement de direction.

De préférence, dans l'application particulière de la figure 1, la barre ionisante 6 est positionnée de telle sorte que le champ ionisant 6a permet de faire adhérer la bande de non-tissé multicouche W contre la bande de transport 40 depuis au moins la transition (A) entre la portion rectiligne 40a et la portion courbe 40b.

Plus préférentiellement encore, tel que cela est illustré sur la figure 1, le champ ionisant 6a est présent dans une région qui s'étend depuis un point (A1) en amont de la transition A. Il permet ainsi de charger électrostatiquement, et par là-même de faire adhérer, la bande de non-tissé multicouche W contre la bande de transport 40 avant sont entrée dans la portion courbe 40b de changement de direction.

Egalement, en aval de la transition (A), le champ ionisant 6a est appliqué jusqu'au point (A2), et ne s'étend pas nécessairement jusqu'au point de sortie B. Entre les points A2 et B, le champ ionisant 6a n'étant pas présent, les trois couches non-tissé W1/W2/W3 commencent à se décharger, les ions se déchargeant à la terre via la bande de transport conductrice 40. Néanmoins, la charge électrostatique reste de préférence suffisante pour faire adhérer les trois couches de non-tissé W1/W2/W3 contre la bande de transport 40 dans la portion courbe qui s'étend entre les points A2 et B.

Dans l'exemple particulier de la figure 1, pour faciliter la reprise de la bande de non-tissé multicouche W par le transporteur à bande 5, une boîte d'aspiration 7 est positionnée dans la région de transition entre les deux transporteurs à bande 4 et 5. En fonctionnement, cette boîte d'aspiration 7 permet de générer localement, à travers la bande 50 perméable à l'air du transporteur 5, un flux d'air (symbolisé par des flèches F sur la figure 1), qui permet de plaquer temporairement la bande de non-tissé multicouche W à la surface de la bande de transport 50. Le flux d'aspiration généré par cette boîte d'aspiration 7 permet de décoller de la bande de transport 40 la bande de non-tissé multicouche W qui adhére à ladite bande de transport 40 sous l'effet de sa charge électrostatique.

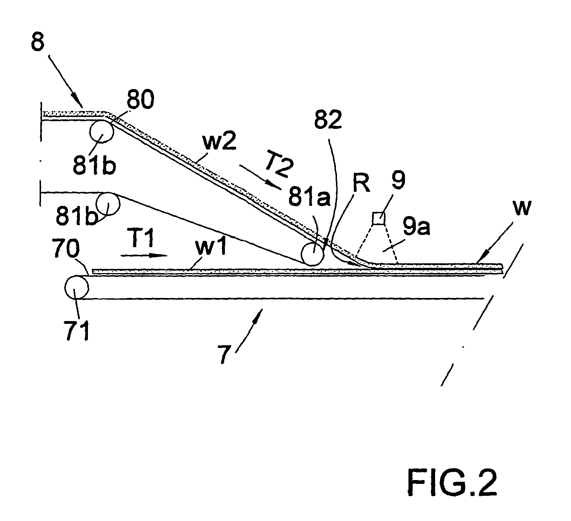

On a représenté, sur la figure 2, une autre application de l'invention. Dans cette application, on met en oeuvre un ensemble de formation et de transport d'une bande de non-tissé multicouche W, comprenant deux transporteurs à bande 7 et 8, et des moyens d'ionisation 9.

Le transporteur à bande inférieur 7 comporte une bande de transport sans fin 70, qui est enroulée sur des rouleaux de guidage 71, au moins un des rouleaux de guidage 71 étant motorisé pour l'entraînement de la bande de transport 70. Le transporteur à bande supérieur 8 comporte une bande de transport sans fin 80, qui est enroulée sur des rouleaux de guidage 81a, 81b, au moins un des rouleaux de guidage 81a, 81b étant motorisé pour l'entraînement de la bande de transport 80. Selon le cas, les bandes de transport 70, 80 peuvent être imperméables ou perméables à l'air. Le rouleau de guidage avant 81a correspondant à l'extrémité avant 82 du transporteur à bande supérieur 8 est positionné au dessus et à proximité du brin supérieur de la bande de transport 70 du transporteur inférieur 7.

En fonctionnement, une première bande de non-tissé W1 (par exemple délivrée par une carde non-tissé) est déposée sur la bande de transport 70, et est acheminée par cette bande de transport 70 dans la direction T1. Une deuxième bande de non-tissé W2 (par exemple délivrée par une carde non-tissé) est déposée sur la bande de transport 80, et est acheminée par cette bande de transport 80 dans la direction T2, jusqu'au brin supérieur de la bande transport 70. En aval du rouleau de guidage avant 81a, la bande de non-tissé W2 est déposée sur la première bande de non-tissé W1, ce qui permet de former la bande de non-tissé multicouche W. En aval de la génératrice transversale de réunification R des deux bandes de non-tissé W1, W2, la bande de non-tissé multicouche W est acheminée par la bande de transport 70 dans la direction T1.

Les moyens d'ionisation 9 sont positionnés au dessus de la bande de transport 70 et génèrent un champ ionisant 9a (schématisé en pointillés) qui permet de charger électrostatiquement la bande de non-tissé multicouche W, dans une région, qui dans la direction de transport T1 couvre la génératrice transversale de réunification R des première W1 et deuxième W2 couches de non-tissé.

En fonctionnement, grâce à leur charge électrostatique, les couches de non-tissé W1, W2 sont plaquées contre la bande de transport 70 au moins au niveau de la génératrice de réunification transversale R, et on évite ainsi tout risque de flottement des couches dans cette zone, et en particulier de la couche supérieure W2. La formation de la bande de non-tissé multicouche W peut ainsi avantageusement être réalisée avec des vitesses de transport des bandes 70 et 80 plus importantes, ce qui permet d'augmenter les cadences de production, sans préjudice pour la qualité de la bande de non-tissé multicouche W.

En sortie du champ ionisant 9a, les couches de non-tissé W1 et W2 se déchargent progressivement par l'intermédiaire de la bande de transport 70 réalisée dans un matériau électriquement conducteur. L'adhérence électrostatique est donc maintenue sur une certaine distance au-delà du champ ionisant 9a. Il est envisageable dans le cadre de l'invention, de prévoir des moyens d'ionisation supplémentaires (non représentés) en aval des moyens d'ionisation 9, en sorte de recharger électrostatiquement la bande de non-tissé multicouche W. Le cas échéant ces moyens d'ionisation supplémentaires peuvent être prévus en sorte de faire adhérer de manière électrostatique la bande non-tissé multicouche W sur toute la longueur de son trajet au contact de la bande de transport 70.

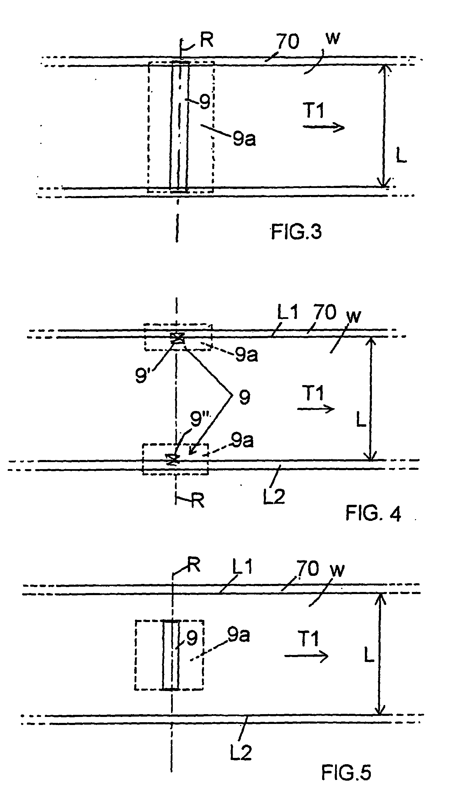

Plusieurs variantes de réalisation pour les moyens d'ionisation 9 sont représentées de manière schématique sur les figures 3 à 5. Sur ces figures, on a symbolisé par une ligne pointillée la génératrice R de réunification des deux couches de non-tissé W1 et W2.

Dans une première variante de réalisation (figure 3), les moyens d'ionisation 9 sont choisis en sorte de générer un champ ionisant 9a, qui s'étend continûment dans la direction transversale de la bande de transport 70 (direction perpendiculaire au plan de la figure 2) et couvre toute la largeur (L) de la bande non-tissé multicouche W. Par exemple, les moyens de ionisation comportent au moins une barre ionisante 9 orientée transversalement à la direction de transport T1. La bande de non-tissé multicouche W est ainsi plaquée de manière électrostatique sur toute sa largeur (L).

Dans une deuxième variante de réalisation (figure 4), les moyens d'ionisation 9 sont choisis en sorte de générer un champ ionisant 9a en deux parties disjointes, localisées au droit des lisières longitudinales L1 et L2 de la bande de non-tissé W. Les moyens d'ionisation 9 comportent par exemple deux pinceaux ionisants 9', 9" montés respectivement au dessus et au droit des deux lisières L1 et L2. Dans ce cas, dans la zone de réunification R des deux bandes de non-tissé W1 et W2, la bande de non-tissé multicouche W est plaquée de manière électrostatique contre la bande de transport 70 uniquement au niveau de ses lisières L1 et L2.

Dans une troisième variante de réalisation (figure 5), les moyens d'ionisation 9 sont choisis en sorte de générer un champ ionisant 9a, qui couvre uniquement une partie centrale de la bande de non-tissé multicouche W, et ne s'étend pas jusqu'aux deux lisères L1 et L2.

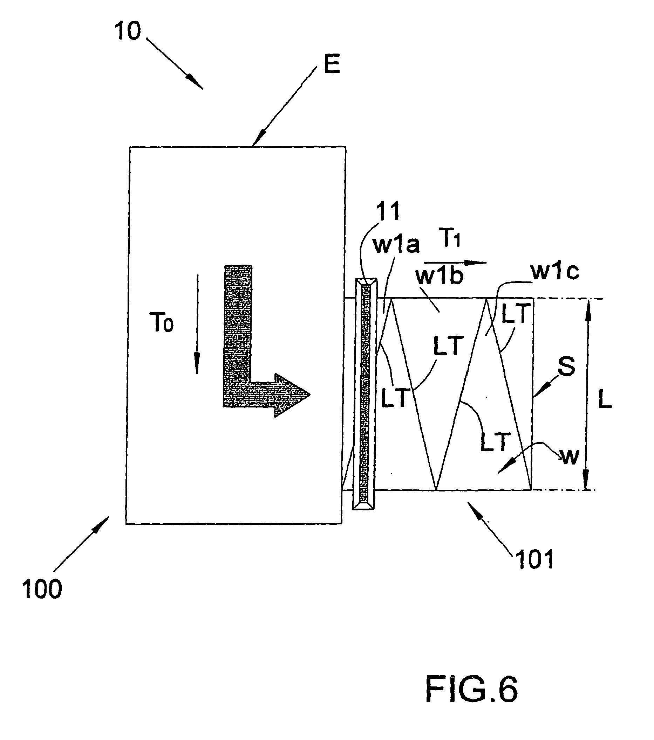

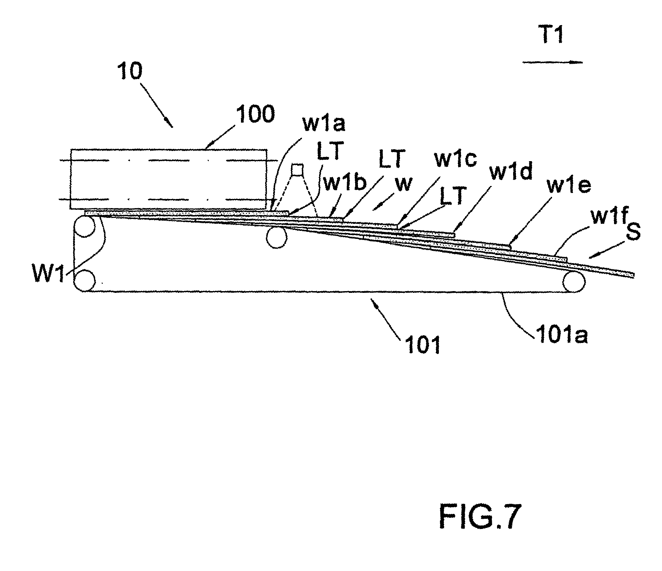

On a représenté, sur les figures 6 et 7, une autre application de l'invention en sortie d'un étaleur-nappeur 10. La structure et le fonctionnement d'un étaleur-nappeur sont connus de l'homme du métier et ne seront donc pas détaillés dans la présente description. L'homme du métier peut par exemple se référer au texte de la demande de brevet internationale publiée sous le numéro WO 92/21799.

Sur la figure 6, l'entrée et la sortie de l'étaleur-nappeur 10 sont référencées respectivement E et S. Les deux transporteurs à bande d'entrée (avant et arrière) de l'étaleur-nappeur sont indiqués par la référence générale 100, et le transporteur à bande à sortie (orienté transversalement aux transporteurs d'entrée 100) est référencé 101.

De manière connue en soi, en fonctionnement de l'étaleur-nappeur 10, une bande de non-tissé W1 (par exemple un voile non-tissé non consolidé issu d'une carde non-tissé, qui n'est pas représentée et qui est positionnée en amont de l'étaleur-nappeur 10) est introduite à l'entrée E de l'étaleur-nappeur. Cette bande de non-tissé W est dans un premier temps acheminée dans la première direction T0. Dans un deuxième temps, cette bande de non-tissé W1 est repliée sur elle-même (grâce à des mouvements alternatifs et synchronisés de deux chariots avant et arrière non représentés) à la surface du transporteur de sortie 101. Au cours de la phase de repliement, la bande de non-tissé W1 est pincée entre d'une part les bandes de transport sans fin des deux transporteurs d'entrée 100 et d'autre part la bande de transport sans fin 101a du transporteur de sortie 101. En sortie de l'étaleur-nappeur 10, on obtient une bande de non-tissé multicouche W épaisse, formée d'une pluralité de couches de non-tissé W1a,W1b, W1c,..., qui se chevauchent, ladite bande multicouche W étant transportée en sortie dans la direction T1 sensiblement perpendiculairement à la direction d'entrée T0.

En référence à la figure 7, tant que la bande de non-tissé multicouche W est pincée entre les transporteurs d'entrée 100 et le transporteur de sortie 101, les couches de non-tissé W1a, W1b, Wc sous-jacentes aux transporteurs d'entrée 100 sont légèrement comprimées. En revanche, dès que ces couches de non-tissé ne sont plus sous-jacentes aux transporteurs d'entrée 100, elles se détendent à la surface du transporteur de sortie 101, ce qui aboutit à une augmentation de l'épaisseur de la bande non-tissé W multicouche.

Cette augmentation d'épaisseur, combinée à l'avancement de la bande de non-tissé multicouche W dans la direction de sortie T1, occasionne des phénomènes de soulèvement et de retournement des lisières transversales avant LT de la couche supérieure de la bande multicouche W. Les risques de soulèvement et de retournement des lisières transversales avant LT de chaque couche supérieure de la bande multicouche W sont accentués par le fait que, dans un d'étaleur-nappeur, la bande de transport de sortie 101a avance dans la direction T1 de manière discontinue.

Ces phénomènes de soulèvement et de retournement, lorsqu'ils se produisent, engendrent localement des défauts transversaux dans la bande de non-tissé multicouche W, et sont donc très préjudiciables à la qualité de la bande de non-tissé multicouche W. Pour diminuer les risques de soulèvement et de retournement des lisères transversales avant LT de la couche de non-tissé supérieure, on est jusqu'à ce jour contraint de limiter la vitesse de déplacement de la bande de non-tissé W dans la direction T1.

Pour pallier aux problèmes précités de soulèvement et de retournement des lisères transversales avant LT de chaque couche supérieure de la bande de non-tissé multicouche W, l'étaleur-nappeur 10 de l'invention est équipé de moyens d'ionisation, qui sont réalisés sous la forme par exemple d'une barre ionisante 11, et qui sont disposés au dessus du brin supérieur de la bande de transport 101a du transporteur de sortie 101, à proximité des transporteurs d'entrée 100. Ces moyens d'ionisation génèrent un champ ionisant 11a (champ électrique 11a saturé en ions), qui est symbolisé par des pointillés sur la figure 7. Ce champ ionisant 11a s'étend de préférence sur au moins toute la largeur (L) de la bande de non-tissé W.

En sortie des transporteurs d'entrée 100, les couches W1a, W1b, W1c de la bande de non-tissé multicouche W, qui sont relâchées et ne sont plus comprimées par les transporteurs d'entrée 100 contre le transporteur de sortie 101, traversent le champ ionisant 11a et se chargent électrostatiquement. Il en résulte avantageusement une compression des couches de non-tissé entre-elles et un maintien amélioré de la bande de non-tissé multicouche W contre la surface de la bande de transport de sortie 70. On évite ainsi le soulèvement et le retournement de la lisière transversale avant LT de chaque couche supérieure de non-tissé en sortie des transporteurs d'entrée 100.

La compression en épaisseur et l'adhérence électrostatique de la bande de non-tissé multicouche W contre la bande de transport 100 sont maintenues en pratique au-delà du champ ionisant 11a, tant que la charge électrostatique reste suffisante. Le cas échéant, mais de manière facultative selon l'invention, il est envisageable de prévoir des moyens d'ionisation supplémentaires en aval des moyens d'ionisation principaux 11, pour éventuellement recharger de manière électrostatique la bande de non-tissé multicouche W, et prolonger la compression et/ou l'adhérence électrostatique de la bande de non-tissé multicouche W contre sa surface de transport.

Dans les applications des figures annexées, on charge de manière électrostatique la bande de non-tissé multicouche W, laquelle se décharge ensuite progressivement par l'intermédiaire de sa surface de transport (50, 70, 101a) électriquement conductrice. Bien que cette solution soit préférentielle, elle n'est toutefois pas limitative de l'invention. A titre d'exemples, dans une autre variante, c'est la surface de transport qui peut être chargée de manière électrostatique ; dans une autre variante, à la fois la bande de non-tissé multicouche W et sa surface de transport peuvent être chargées électrostatiquement et avec des polarités opposées.

L'invention n'est pas limitée à la mise en oeuvre de bandes de transport, mais peut plus généralement être appliquée à toute surface de formation et de transport d'une bande de non-tissé multicouche. En particulier, la surface de formation et de transport de la bande de non-tissé multicouche W peut être courbe, et notamment cylindrique.

## Revendications

1. Procédé de formation et de transport d'une bande de non-tissé multicouche (W), au cours duquel on dépose au moins une couche de non-tissé de fibres ou filaments (W2 ; W1a) sur au moins une autre couche de non-tissé de fibres ou filaments (W1 ; W1b) transportée par une surface de transport (50 ; 70 ; 101a) dans une direction de transport donnée (T1), en sorte de former une bande de non-tissé multicouche (W), **caractérisé en ce qu'**on charge électrostatiquement la bande de non-tissé multicouche (W) et/ou la surface de transport (50 ; 70 ; 101a) dans une région:
(a) qui dans la direction de transport (T1) couvre la génératrice transversale de réunification (R) des deux couches de non-tissé (W1,W2) ou une zone transversale de transition (LT) entre les deux couches de non-tissé (W1a, W1b),
et/ou
(b) qui s'étend transversalement à la direction de transport (T1) sur au moins toute la largeur (L) de la bande de non-tissé multicouche (W),
en sorte de faire adhérer la bande de non-tissé multicouche (W) contre la surface de transport.

2. Procédé selon la revendication 1, **caractérisé en ce que** les couches de non-tissé sont constituées par deux bandes de non-tissé (W1, W2) qui sont superposées dans la direction de transport (T1) et dans le sens de leur longueur.

3. Procédé selon la revendication 1, **caractérisé en ce qu'**au moins une couche de non-tissé supérieure (W1a) est déposée sur au moins une couche de non-tissé sous-jacente (W1b), de telle sorte que la couche de non-tissé supérieure (W1a) comporte une lisière transversale avant (LT) qui est orientée transversalement à la direction de transport (T1) de la bande de non-tissé multicouche (W).

4. Procédé selon la revendication 3, **caractérisé en ce qu'**il est mis en oeuvre en sortie d'un étaleur-nappeur (10).

5. Ensemble de formation et de transport d'une bande de non-tissé multicouche (W), comportant au moins une surface (50 ; 70 ; 101a) de formation et de transport, qui est mobile dans une direction de transport (T1) donnée, et qui permet le transport d'au moins une première couche de non-tissé (W1,W1b), des moyens de transport (3; 8; 100) permettant de déposer une deuxième couche de non-tissé (W2, W1a) sur ladite surface de formation et de transport en sorte de former la bande de non-tissé multicouche (W), **caractérise en ce qu'**il comporte des moyens d'ionisation (6, 9, 11) aptes, en fonctionnement, à générer un champ ionisant (6a; 9a ; 11a) permettant de faire adhérer de manière électrostatique la bande de non-tissé multicouche (W) contre la surface de formation et de transport (50 ; 70 ; 101a) et
(a) qui, dans la direction de transport (T1), couvre la génératrice transversale de réunification (R) des deux couches de non-tissé (W1,W2) ou une zone transversale de transition (LT) entre les deux couches de non-tissé (W1a, W1b), et/ou
(b) qui s'étend transversalement à la direction de transport (T1) sur au moins toute la largeur (L) de la bande de non-tissé multicouche (W).

6. Ensemble selon la revendication 5, **caractérisé en ce que** lesdits moyens de transport (3 ; 8) sont conçus et agencés par rapport à ladite surface de formation et de transport (50 ; 70), en sorte de permettre la superposition de deux bandes de non-tissé (W1, W2) dans le sens de leur longueur et dans la direction de transport (T1).

7. Ensemble selon la revendication 5, **caractérisé en ce que** lesdits moyens de transport (100) sont conçus et agencés par rapport à ladite surface de formation et de transport (101a), en sorte de déposer une couche de non-tissé supérieure (W1a) sur au moins couche de non-tissé sous-jacente (W1b) transportée par la surface de formation et de transport (100), de telle sorte que la couche de non-tissé supérieure (W1a) comporte une lisière transversale avant (LT) qui est orientée transversalement à la direction de transport (T1) de la surface de formation et de transport (101a).

8. Ensemble selon la revendication 7, **caractérisé en ce qu'**il constitue un étaleur-nappeur (10) comportant des transporteurs à bande d'entrée (100) et un transporteur à bande de sortie (101) transversal formant ladite surface de formation et transport (101a), et **en ce que** les moyens d'ionisation (11) sont positionnés au niveau du transporteur de sortie (101) et au moins à proximité des transporteurs à bande d'entrée (100).

## Claims

1. Method for forming and transporting a multi-layer non-woven web (W), during which at least one non-woven layer of fibres or filaments (W2; W1a) is deposited on at least one other non-woven layer of fibres or filaments (W1; W1b) transported by a transport surface (50; 70; 101a) in a given direction of transport (T1), so as to form a multi-layer non-woven web (W), **characterised in that** the multi-layer non-woven web (W) and/or the transport surface (50; 70; 101a) are/is electrostatically charged in an area:
(a) which, in the direction of transport (T1), covers the transverse generator (R) for joining the two non-woven layers (W1, W2) or a transverse transition zone (LT) between the two non-woven layers (W1a, W1b),
and/or
(b) which extends transversely in the direction of transport (T1) over at least the entire width (L) of the multi-layer non-woven web (W),
such that the multi-layer non-woven web (W) is made to adhere against the transport surface.

2. Method according to claim 1, **characterised in that** the non-woven layers consist of two non-woven webs (W1, W2), which are superimposed in the direction of transport (T1) and in the direction of their length.

3. Method according to claim 1, **characterised in that** at least one upper non-woven layer (W1a) is deposited on at least one underlying non-woven layer (W1b), such that the upper non-woven layer (W1a) includes a front transverse selvedge (LT), which is transversely oriented in the direction of transport (T1) of the multi-layer non-woven web (W).

4. Method according to claim 3, **characterised in that** it is implemented at the exit of a cross-lapper (10).

5. Arrangement for forming and transporting a multi-layer non-woven web (W), including at least one formation and transport surface (50; 70; 101a), which can move in a given direction of transport (T1) and which allows the transport of at least a first non-woven layer (W1, W1b), with means of transport (3; 8; 100) enabling a second non-woven layer (W2, W1a) to be deposited on said formation and transport surface, so as to form the multi-layer non-woven web (W), **characterised in that** it includes ionising means (6, 9, 11), which, when operating, are suitable for generating an ionising field (6a; 9a; 11a) enabling the multi-layer non-woven web (W) to adhere in an electrostatic manner against the formation and transport surface (50; 70; 101a), and
(a) which, in the direction of transport (T1), covers the transverse generator (R) for joining the two non-woven layers (W1, W2) or a transverse transition zone (LT) between the two non-woven layers (W1a, W1b),
and/or
(b) which extends transversely in the direction of transport (T1) over at least the entire width (L) of the multi-layer non-woven web (W).

6. Arrangement according to claim 5, **characterised in that** said means of transport (3; 8) are designed and arranged in relation to said formation and transport surface (50; 70), so as to enable the superimposition of two non-woven webs (W1, W2) in the direction of their length and in the direction of transport (T1).

7. Arrangement according to claim 5, **characterised in that** said means of transport (100) are designed and arranged in relation to said formation and transport surface (101a), so as to deposit an upper non-woven layer (W1a) on at least one underlying non-woven layer (W1b) transported by the formation and transport surface (100), such that the upper non-woven layer (W1a) includes a front transverse selvedge (LT), which is transversely oriented in the direction of transport (T1) of the formation and transport surface (101 a).

8. Arrangement according to claim 7, **characterised in that** it consists of a cross-lapper (10) including entry web conveyors (100) and a transverse exit web conveyor (101) forming said formation and transport surface (101a), and **in that** the ionising means (11) are positioned at the level of the exit conveyor (101) and at least in proximity of the entry web conveyors (100).

## Patentansprüche

1. Verfahren zum Bilden und Transportieren einer mehrlagigen Vliesstoffbahn (W), bei dem zumindest eine Vliesstofflage aus Fasern bzw. Filamenten (W2; W1a) auf zumindest eine weitere Vliesstofflage aus Fasern bzw. Filamenten (W1; W1b) gelegt wird, die mittels einer Transportfläche (50; 70; 101 a) in einer gegebenen Transportrichtung (T1) transportiert wird, so dass eine mehrlagige Vliesstoffbahn (W) gebildet wird, **dadurch gekennzeichnet, dass** die mehrlagige Vliesstoffbahn (W) und/oder die Transportfläche (50; 70; 101 a) in einem Bereich elektrostatisch geladen wird, der
(a) in der Transportrichtung (T1) die querverlaufende Schnittkante (R) der beiden Vliesstofflagen (W1, W2) bzw. einen querverlaufenden Übergangsbereich (LT) zwischen den beiden Vliesstofflagen (W1a, W1b) überdeckt,
und/oder
(b) sich quer zur Transportrichtung (T1) zumindest über die gesamte Breite (L) der mehrlagigen Vliesstoffbahn (W) erstreckt,
so dass die mehrlagige Vliesstoffbahn (W) zum Anhaften an der Transportfläche gebracht wird.

2. Verfahren nach Anspruch 1, **dadurch gekennzeichnet, dass** die Vliesstofflagen aus zwei Vliesstoffbahnen (W1, W2) bestehen, die in Transportrichtung (T1) und ihrer Länge nach übereinandergelegt werden.

3. Verfahren nach Anspruch 1, **dadurch gekennzeichnet, dass** zumindest eine obere Vliesstofflage (W1a) auf zumindest eine darunterliegende Vliesstofflage (W1b) so gelegt wird, dass die obere Vliesstofflage (W1a) einen quer verlaufenden Vorderrand (LT) aufweist, der quer zur Transportrichtung (T1) der mehrlagigen Vliesstoffbahn (W) ausgerichtet ist.

4. Verfahren nach Anspruch 3, **dadurch gekennzeichnet, dass** es am Austritt eines Vliesbahnlegers (10) durchgeführt wird.

5. Anordnung zum Bilden und Transportieren einer mehrlagigen Vliesstoffbahn (W), enthaltend zumindest eine Bildungs- und Transportfläche (50; 70; 101 a), die in einer gegebenen Transportrichtung (T1) verstellbar ist und den Transport zumindest einer ersten Vliesstofflage (W1, W1 b) ermöglicht, (und) Transportmittel (3;8;100), welche das Ablegen einer zweiten Vliesstofflage (W2, W1a) auf die oder der Bildungs- und Transportfläche gestatten, so dass die mehrlagige Vliesstoffbahn (W) gebildet wird, **dadurch gekennzeichnet, dass** sie Ionisierungsmittel (6, 9, 11) enthält, die dazu geeignet sind, bei Betrieb ein Ionisierungsfeld (6a; 9a; 11a) zu erzeugen, mit dem die mehrlagige Vliesstoffbahn (W) zum elektrostatischen Anhaften an der Bildungs- und Transportfläche (50; 70; 101a) gebracht werden kann und
(a) in der Transportrichtung (T1) die querverlaufende Schnittkante (R) der beiden Vliesstofflagen (W1, W2) oder einen querverlaufenden Übergangsbereich (LT) zwischen den beiden Vliessfiofflagen (W1a, W1b) überdeckt,
und/oder
(b) sich quer zur Transportrichtung (T1) zumindest über die gesamte Breite (L) der mehrlagigen Vliesstoffbahn (W) erstreckt.

6. Anordnung nach Anspruch 5, **dadurch gekennzeichnet, dass** die Transportmittel (3;8) derart ausgelegt und bezüglich der Bildungs- und Transportfläche (50;70) angeordnet sind, dass sie das Übereinanderlegen von zwei Vliesstoffbahnen (W1,W2) in Richtung ihrer Länge und in Transportrichtung (T1) gestatten.

7. Anordnung nach Anspruch 5, **dadurch gekennzeichnet, dass** die Transportmittel (100) derart ausgelegt und bezüglich der Bildungs- und Transportfläche (101 a) angeordnet sind, dass sie eine obere Vliesstofflage (W1a) auf zumindest eine darunterliegende Vliesstofflage (W1b) legen, die mittels der Bildungs- und Transportfläche (100) transportiert wurde, so dass die obere Vliesstofflage (W1a) einen quer verlaufenden Vorderrand (LT) aufweist, der quer zur Transportrichtung (T1) der Bildungs- und Transportfläche (101 a) ausgerichtet ist.

8. Anordnung nach Anspruch 7, **dadurch gekennzeichnet, dass** sie einen Vliesbahnleger (10) bildet, der Eingangsbahnförderer (100) und einen quer verlaufenden Ausgangsbahnförderer (101) enthält, der die Bildungs- und Transportfläche (101a) bildet, und dass die Ionisierungsmittel (11) im Bereich des Ausgangsbahnförderers (101) und zumindest in der Nähe der Eingangsbahnförderer (100) positioniert sind.
